# EUROPÄISCHE PATENTSCHRIFT

(11) **EP 1 460 537 B1**
(45) Veröffentlichungstag und Bekanntmachung des Hinweises auf die Patenterteilung: **14.01.2009**
(21) Anmeldenummer: 04100307.0
(22) Anmeldetag: 29.01.2004
(51) Int. Cl.: G06F 9/44, G06F 9/06, B60R 16/02

(54) **Elektronisches Informations- und/oder Kommunikationssystem eines Kraftfahrzeuges**
Electronic information and communication system of an automobile
Système d'information et de communication électronique d'un véhicule automobile

(30) Priorität: 14.03.2003 DE 10311336
(43) Veröffentlichungstag der Anmeldung: 22.09.2004
(73) Patentinhaber: Continental Automotive GmbH, 30165 Hannover (DE)
(72) Erfinder: Bulova, Viktor, 35625, Hüttenberg (DE); Hoepken, Harro, 35599, Solms (DE)

(56) Entgegenhaltungen:
- EP-A- 0 582 081
- DE-A- 10 012 756
- DE-A- 19 910 760
- FR-A- 2 798 482
- "SuSE LINUX 8.0 Basis" 2002, SUSE LINUX AG , 90429 NÜRNBERG (DE) , XP002284176 * Seite III - Seite IX * * Seite 6 - Seite 7 * * Seite 9, Absatz 1 - Seite 11, Absatz 3 * * Seite 50, Absatz 6 * * Seite 52, Absätze 3,8 * * Seite 53, Absatz 5 - Seite 54 * * Seite 65, Absatz 3 * * Seite 86, letzter Absatz - Seite 91, letzter Absatz * * Seite 106, letzter Absatz - Seite 112, Absatz 4 *
- VERNON, RICHARD: "Behind the Wheel with LINUX" LINUX JOURNAL ELJ ISSUE 5, [Online] Nr. 5, 20. September 2001 (2001-09-20), Seiten 1-3, XP002284174 INTERNET Gefunden im Internet: URL:http://www.linuxjournal.com/article.ph p?sid=4812> [gefunden am 2004-06-09]
- Heinrich, Ch, Dr.; Stammler, W., Dr.: "Sprachbedienung im Kfz - Speechdialogsystem for vehicles"; VDI-Berichte 1287/1996 "Elektronik im Kraftfahrzeug"; VDI-Verlag GmbH, Düsseldorf (DE); 12.09.1996; Seiten 425-441

## Beschreibung

Die Erfindung betrifft ein elektronisches Informations- und/oder Kommunikationssystem eines Kraftfahrzeugs nach dem Oberbegriff des Anspruchs 1, wie es aus der DE 100 12 756A1 bekannt ist. Es umfasst mit einer Recheneinheit, die mit einer optischen Ausgabeeinheit und einer Eingabeeinheit verbunden ist, sowie mit einem Speicherelement zur Abspeicherung von mehreren Benutzerprofilen.

Ein elektronisches Informations-und/oder kommunikationssystem ist ferner in Form eines Audio-/Navigationssystems aus der DE 199 10 760 A1 bekannt. Das Audio- und/oder Navigationssystem weist ein Speicherelement zur Abspeicherung benutzerbezogener Systemparameter und Mittel zur Identifizierung des Benutzers, sowie mit dem Speicherelement verbundene Mittel zur Auswahl und Einstellung der abgespeicherten benutzerbezogenen Systemparameter des Benutzers als aktuelle Systemparameter auf. Zur Identifizierung des Benutzers kann beispielsweise der Fahrzeugschlüssel dienen. Auch eine Benutzeridentifizierung über ein Spracherkennungssystem ist möglich. Dem auf diese Weise erkannten Benutzer wird automatisch eine zuvor abgespeicherte Einstellung des Systems zugeordnet.

Aus der EP 0 582 081 A2 ist ebenfalls ein elektronisches System eines Kraftfahrzeuges, insbesondere ein Navigationssystem, bekannt, bei dem der Benutzer automatisch erkannt wird und anschließend benutzerbezogene Systemeinstellungen geladen werden. Die Benutzeridentifizierung kann beispielsweise durch Eingabe eines Passworts erfolgen. Als weitere Möglichkeiten zur Identifizierung des Benutzers werden eine Gesichtserkennung mittels einer Videokamera oder eine Fingerabdruckidentifizierung genannt.

Bei den zuletztgenannten Systemen wird eine feste benutzerbezogene Einstellung des elektronischen Systems vorgenommen. Diese Systeme sind daher relativ unflexibel. Beispielsweise ist ein Wechsel von einem Profil in ein anderes Profil nicht möglich. Zudem sind diese Systeme bei geschäftlicher Nutzung, beispielsweise als Mietwagen, nicht einsetzbar, da in diesen Fällen der Benutzer des Fahrzeugs zuvor nicht registriert wurde und daher von dem System nicht erkannt werden kann.

Aufgabe der Erfindung ist es daher, die bekannten Systeme derart weiterzuentwickeln, dass diese flexibel unter unterschiedlichen Einsatzbedingungen einsetzbar und nutzbar sind. Vorzugsweise sollen auch im geschäftlichen Einsatz voreingestellte Benutzerprofile für unterschiedliche Benutzergruppen realisierbar sein.

Die Aufgabe wird durch ein elektronisches System mit den Merkmalen des Anspruchs 1 gelöst.

Die Beschränkung auf ein einziges Benutzerprofil, wie dies bei den bekannten Systemen mit automatischer Einstellung von Systemparametern nach Identifizierung des Benutzers der Fall ist, ist damit aufgehoben. Dem Benutzer werden die verfügbaren Benutzerprofile angezeigt und er kann das für seine gegenwärtige Situation passende Benutzerprofil auswählen. Beispielsweise kann für einen Benutzer ein privates und ein geschäftliches Benutzerprofil abgespeichert sein. Mit seinem geschäftlichen Benutzerprofil hat der Benutzer dann beispielsweise Zugriff auf spezifische geschäftlich genutzte Zieladressen für ein Navigationssystem. Im privaten Benutzerprofil sind dagegen die spezifischen privaten Zieladressen des jeweiligen Benutzers abgespeichert. Hierdurch wird eine größere Übersichtlichkeit für den Benutzer bei der Auswahl der jeweiligen Zieladresse erreicht. Gleiches gilt beispielsweise auch für ein Telefonbuch, wenn das elektronische System ein Telefonsystem beinhaltet.

In einer besonderen Ausführungsform ist vorgesehen, dass das Speicherelement neben offen auswählbaren Benutzerprofilen auch geschützte Benutzerprofile enthält. Die offen auswählbaren Benutzerprofile können von jedermann ausgewählt werden. Zur Auswahl eines geschützten Benutzerprofils ist dagegen eine Berechtigung erforderlich. Hierzu können die geschützten Profile beispielsweise mit einem Passwortschutz versehen sein. Erst nach Eingabe des richtigen Passworts ist dann das jeweilige geschützte Profil verfügbar. Ein derartiges System ist im geschäftlichen Bereich vom besonderen Interesse. Beispielsweise kann im Mietwagensektor vorgesehen sein, die Freischaltung einzelner Komponenten des elektronischen Informations- oder Kommunikationssystems preislich gestaffelt vorzunehmen. Handelt es sich beispielsweise bei dem elektronischen System um ein Multimediasystem, so kann der Mieter des Fahrzeuges bei der Anmietung wählen, welche der vorhandenen Komponenten, bei denen es sich beispielsweise um ein Audiosystem, ein Videosystem, ein Navigationssystem, einen DVD-Spieler und dergleichen handeln kann, er nutzen möchte. Entscheidet sich der Mieter beispielsweise dafür, nur das Audiosystem zu nutzen, so kann ihm hierfür ein geringerer Betrag in Rechnung gestellt werden als bei Benutzung des gesamten Multimediasystems. Dem Mieter wird dann bei der Anmietung eine Kennung mitgeteilt, mit der er ein Benutzerprofil aktivieren kann, das lediglich die Audiokomponenten freischaltet, während die anderen Komponenten des Multimediasystems gesperrt sind. Einem anderen Mieter, der alle Komponenten des Multimediasystems nutzen möchte, wird eine andere Kennung mitgeteilt, mit der er ein Benutzerprofil aktivieren kann, das all diese Komponenten freischaltet. Das elektronische System gemäβ der Erfindung enthält dafür Mittel zum Sperren mindestens einer der Komponenten aufgrund des ausgewählten Benutzerprofils.

In einer besonderen Ausführungsform ist vorgesehen, dass die Benutzerprofile editierbar sind. Dadurch können die Benutzerprofile jeweils an sich ändernde Umstände angepasst werden. Besonders vorteilhaft ist es, wenn Teile eines Benutzerprofils in ein anderes Benutzerprofil kopierbar sind. Dies ermöglicht eine besonders einfache und flexible Bedienung des elektronischen Systems.

In einer besonderen Ausführungsform ist vorgesehen, dass neben den speziellen Benutzerprofilen ein unveränderbares Profil mit einer Grundkonfiguration des elektronischen Systems in dem Speicherelement abgespeichert ist. Somit kann beispielsweise das elektronische System zunächst mit dieser Grundkonfiguration betrieben werden. Das System ist damit bereits unmittelbar nach dem Einschalten betriebsbereit. Der Benutzer muss nur dann, wenn er ein spezielles Profil wünscht, tätig werden. Der Vorteil dieser Variante liegt in einer sehr einfachen Bedienung, wenn keine besonderen Anforderungen an die Einstellung des Systems gestellt werden.

In einer weiteren vorteilhaften Ausgestaltung der Erfindung ist vorgesehen, dass eine Administratorfunktion vorgesehen ist, die spezielle Rechte zu übergeordneten Konfigurationen von Benutzerprofilen umfasst. Über die Administratorfunktion kann beispielsweise festgelegt werden, wie viele spezifische Benutzerprofile zur Verfügung stehen sollen. Weiterhin kann über die Administratorfunktion ausgewählt werden, welche Benutzerprofile als offene Profile oder geschützte Profile zur Verfügung stehen sollen. Weiterhin können über die Administratorfunktion unterschiedliche vorgegebene Modelle ausgewählt werden, beispielsweise für Privatnutzung oder geschäftliche Nutzung des Fahrzeugs.

Insbesondere kann mittels der Administratorfunktion die Funktionalität des elektronischen Systems für die Benutzerprofile individuell festlegbar sein.

In einer besonderen Ausführungsform ist vorgesehen, dass ein Spracherkennungssystem Bestandteil des elektronischen Systems ist. Über ein Spracherkennungssystem ist eine besonders komfortable Bedienung des elektronischen Systems möglich. Das Spracherkennungssystem kann dabei als Eingabeeinheit verwendet werden. Bei Spracherkennungssystemen wird in der Regel zwischen sprecherabhängigen und sprecherunabhängigen Systemen unterschieden. Das erfindungsgemäße System weist vorzugsweise als Benutzerprofile sowohl sprecherabhängige Profile als auch mindestens ein sprecherunabhängiges Benutzerprofil auf. Die sprecherabhängigen Benutzerprofile sind einzelnen Benutzern zugeordnet. Nach Auswahl des benutzerspezifischen Profils kann der jeweilige Benutzer auf besonders komfortable Weise Spracheingaben vornehmen. Sprecherabhängige Spracherkennungssysteme erfordern immer eine Trainingsphase, in der das Spracherkennungssystem auf die Aussprache des jeweiligen Benutzers trainiert wird. Für einen Benutzer, der das Fahrzeug beispielsweise nur einmal benutzt, ist eine derartige Trainingsphase zu zeitaufwendig. Ein derartiger Benutzer wird deshalb das sprecherunabhängige Benutzerprofil auswählen, wobei in der Regel gewisse Einschränkungen bei der Spracherkennung in Kauf zu nehmen sind.

In einer weiteren Ausführungsform ist vorgesehen, dass innerhalb eines durch die Systemkonfiguration und/oder die Administratorfunktion vorgegebenen Rahmens (z.B. maximale Anzahl von individuellen Profilen) vom Endbenutzer selbst bis zu einem gewissen Umfang neue Profile erstellt oder wieder gelöscht werden können. Damit wird eine flexible Selbstverwaltung ermöglicht.

Die Erfindung kann in nicht vom Schutzumfang der Patentansprüche umfasster Weise auch außerhalb von Informations- und/oder Kommunikationssystemen von Kraftfahrzeugen eingesetzt werden. In vielen Systemen und Produkten des täglichen Gebrauchs sind benutzerbezogene und anwendungsbezogene Einstellungen notwendig. Werden diese Systeme von mehreren Personen in unterschiedlicher individueller Art genutzt, so werden bestehende Einstellungen durch andere Benutzer teilweise wieder verändert und müssen durch den vorherigen Benutzer wieder zurückgestellt werden. Hierzu gehören insbesondere:
- Einstellungen von Eigenschaften in Entertainmentgeräten, wie beispielsweise Radios, Verstärker, Fernsehgeräte, CD-Spieler/Wechsler, MP3-Player mit den Funktionen Lautstärkeeinstellung, Vorauswahl von Radiosendern, Inhalte von Adreßbüchern, individuelle Programmspeicherlisten, Favoritenlisten etc.,
- Telefoneinrichtungen, die von verschiedenen Personen im Privat- oder Unternehmensbereich eingesetzt werden und individuelle Benutzerprofile beinhalten wie beispielsweise für Telefonverzeichnisse, letzte Anwahlen, letzte Anrufer oder sprecherabhängige Einträge im Telefonbuch,
- Einstellungen bei Haushaltsgeräten oder Wohnsystemen, die benutzer- oder anwenderbezogen eingesetzt werden, z. B. Lichtintensitätseinstellung im Wohnbereich je nach anwesender Person oder Stimmungslage, Einstellung von Bestrahlungssystemen in Sonnenstudios oder im Heimbereich für Dauergäste bzw. Familienmitglieder, Wärmeregulierung in Räumen,
- Einstellungen bei PC-Spielen unterschiedlicher Art, die im Heimbereich von unterschiedlichen Personen benutzt werden und unterschiedliche Einstellungen für die Benutzer vorsehen, beispielsweise für Spielstärke, Layoutgestaltung, Spielstand, akustischen Feedback,
- Professionelle PC-Applikationen mit notwendigerweise individuellen Einstellungen, wie beispielsweise Office-Tools, Sprachlern- und Trainingssysteme, die Zugriff auf individuelle Datenspeicher und Applikationseinstellungen benötigen, wie beispielsweise professionelle Schachprogramme mit einem dem Benutzerprofil zugeordneten Chess-Engine mit vorgegebenen Strategien, Eröffnungsbibliothek oder Layoutform der Präsentation(2-D oder 3-D).

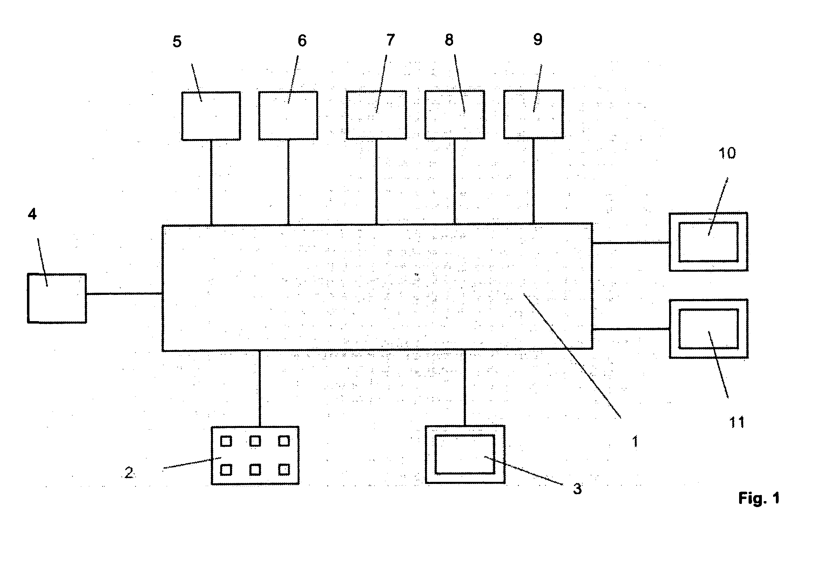

Die Erfindung wird nachfolgend anhand eines Ausführungsbeispiels und der Zeichnung näher erläutert.

Die einzige Figur zeigt ein Blockschaltbild eines Kraftfahrzeugmultimediasystems.

Bei dem Multimediasystem sind an einer Recheneinheit 1 eine Eingabeeinheit 2 und eine optische Ausgabeeinheit 3 angeschlossen. Im Ausführungsbeispiel weist die Eingabeeinheit 2 mehrere Bedienelemente auf. Die Eingabeeinheit 2 kann auch als Fernbedienung (Infrarot oder Funk) ausgebildet sein. Weiterhin ist die Recheneinheit 1 mit einem Speicherelement 4 verbunden, in dem die Benutzerprofile abgespeichert sind. Bei der Speichereinheit 4 handelt es sich um einen nichtflüchtigen Speicher. An die Recheneinheit 1 sind weiterhin ein Spracherkennungsmodul 5, ein DVD-Spieler 6, ein Radioempfänger 7, ein Navigationssystem 8, ein Mobiltelefon 9 sowie weitere Monitore 10, 11 angeschlossen.

Wird das Multimediasystem eingeschaltet, so erscheint zunächst auf der optischen Ausgabeeinheit 3 ein Titelbildschirm. Danach erfolgt das Benutzereingangsmenü "Auswahl Benutzerprofile" mit den verfügbaren Profilen und einer Kennzeichnung des zuletzt verwendeten Profils. Nach Auswahl eines dieser Benutzerprofile wird diese Voreinstellung entsprechend verwendet. Erfolgt innerhalb einer vorgegebenen Zeitspanne keine Auswahl eines individuellen Benutzerprofils, so werden die Einstellungen für das zuletzt verwendete Profil geladen. Falls dieses Profil geschützt ist, werden die Einstellungen für das benutzerunabhängige Profil (abhängig von den Parametern der aktuell eingestellten Systemkonfiguration) entweder mit einer Grund-(default-)Konfiguration des Multimediasystems oder mit den zuletzt verwendeten Einstellungen aus dem benutzerunabhängigen Basisprofil geladen.

Wird das Multimediasystem im Fahrzeug von mehreren Personen benutzt, so besteht die Möglichkeit, personenbezogene Profile mit individuellen Einstellungen einzurichten. Verschiedene Benutzer erhalten so ihre eigenen Profile. Diese persönlichen Einstellungen bleiben bei jedem Benutzerwechsel erhalten.

Das Multimediasystem kann unterschiedlich konfiguriert werden. So lassen sich beispielsweise geschützte Benutzerprofile mit Benutzerschlüssel bzw. sprecherabhängigem Zugriff oder auch offene Profile verwenden. Ferner lassen sich z. B. einem Fahrer auch mehrere Profile zuordnen, z.B. für seine persönlichen Einstellungen mit seinen spezifischen Zieladressen im Bereich "geschäftlich" und "privat". Es lassen sich auch Konfigurationen mit für allen Benutzern offenen Profilen definieren, z. B. innerhalb einer Familie oder für Fahrergemeinschaften.

Neben Individualmodellen lassen sich für firmenbezogene Anwendungen unterschiedliche voreingestellte Systemkonfigurationen als Firmen- oder Geschäftsmodelle auswählen. Diese können z. B. bei nur einem Fahrzeug für zugeordnete Mehrbenutzer oder für Leasingfahrzeuge eingesetzt werden.

Weiterhin ist für die Nutzung des Systems, insbesondere in Mietwagen, vorgesehen, die Freischaltung einzelner Komponenten des Multimediasystems preislich gestaffelt vorzunehmen. Der Mieter des Fahrzeuges kann bei der Anmietung wählen, welche der vorhandenen Komponenten er nutzen möchte. Entscheidet sich der Mieter beispielsweise dafür, nur den Radioempfänger 7 zu nutzen, so kann ihm hierfür ein geringerer Betrag in Rechnung gestellt werden als bei Benutzung des gesamten Multimediasystems. Dem Mieter wird dann bei der Anmietung eine Kennung mitgeteilt, mit der er ein Benutzerprofil aktivieren kann, das lediglich den Radioempfänger 7 freischaltet, während die anderen Komponenten des Multimediasystems gesperrt sind. Einem anderen Mieter, der alle Komponenten des Multimediasystems nutzen möchte, wird eine andere Kennung mitgeteilt, mit der er ein Benutzerprofil aktivieren kann, das all diese Komponenten freischaltet. Die Freischaltung bzw. Sperrung der einzelnen Komponenten kann dabei in an sich bekannter Weise durch Hard- und/oder Software erfolgen.

Auch im Falle des Navigationssystems 8 kann eine derartige selektive Freischaltung angewendet werden. Beispielsweise können über die Benutzerkennung unterschiedliche Benutzerprofile freigeschaltet werden, die Zugang zu unterschiedlich umfangreichen Landkartendaten, beispielsweise nur für Deutschland oder für Gesamteuropa, freischalten. Insofern handelt es sich bei den Dateien mit den Landkartendaten um Komponenten des Navigationssystems im Sinne der Erfindung.

Weiterhin ist eine Administratorfunktion vorgesehen, die zusätzlich Funktionen mit speziellen Rechten zu übergeordneten Konfigurationen von Benutzerprofilen beinhaltet. Hierzu gehören beispielsweise die Anzahl und die Festlegung von offenen oder geschützten Profilen, das Aktivsetzen von individuellen Profilen oder das Festlegen von sprecherunabhängigen Schlüsselworten.

Mit der Administratorfunktion können unterschiedliche Modelle ausgewählt werden. Mögliche Ausprägungen für derartige Modelle sind beispielsweise in der folgenden Tabelle aufgelistet.

| Modellart | Name | Funktionsumfang |
|---|---|---|
| Individualmodell | -,Familie' | drei individuelle Benutzerprofile und ein benutzerunabhängiger Basisbenutzer mit jeweils einem ,Adressbuch für Zieladressen'. |
| Individualmodell | -,Einzelbenutzer' A- | Ein individuelles Benutzerprofil und ein benutzerunabhängiger Basisbenutzer mit jeweils einem ,Adressbuch für Zieladressen' |
| Individualmodell | -,Einzelbenutzer' B- | Drei individuelle Benutzerprofile und ein benutzerunabhängiger Basibenutzer mit jeweils einem ,Adressbuch für Zieladressen' und mit einer abgestuften Komplexität der Benutzerführung und Funktionalität |
| Firmenmodell/ Organisation | -,Einzelbenutzer -Starter' - bis - Expert- | ein individuelles Benutzerprofil mit einem ,Adressbuch für Zieladressen' und mit einer festgelegten Komplexität der Benutzerführung und Funktionalität (kann über die Funktion ,Administrator' bis in Experten-Modus mit Zusatzfunktionen freigeschaltet werden) |
| Firmenmodell/ Organisation | -,Einzelbenutzer A'- | ein individuelles Benutzerprofil mit bis zu vier ,Adressbüchern für Zieladressein '. |
| Firmenmodell/ Organisation | -,Einzelbenutzer B'- | ein individuelles Benutzerprofil mit bis zu vier ,Adressbüchern für Zieladressen' ohne Zugang zur Funktion ,Administrator' für den Einzelbenutzer. |
| Firmenmodell/ Organisation | -,Mehrfachbenutzer A'- | drei individuelle Benutzerprofile mit Verschlüsselung und ein benutzerunabhängiger Basisbenutzer mit jeweils einem ,Adressbuch für Ziviladressen'. |
| Firmenmodell/ Organisation | -,Leasing Modell A'- | ein indivduelles Benutzerprofil mit Verschlüsselung (Schlüsselwort wird bei Fahrzeugübergabe mitgeteilt.) mit einem ,Adressbuch für Zieladressen' ohne Zugang zur Funktion ,Administrator' für den Endbenutzer. |

Wird von dem Administrator beispielsweise das Individualmodell "Familie" ausgewählt, so stehen anschließend drei individuelle Benutzerprofile und ein benutzerunabhängiges Profil mit jeweils einem Adressbuch für Zieladressen des Navigationssystems 8 zur Verfügung. Im Firmenmodell "Mehrfachbenutzer A" stehen dagegen beispielsweise drei individuelle Benutzerprofile mit Verschlüsselung und ein benutzerunabhängiges Grundprofil mit jeweils einem Adressbuch für Zieladressen des Navigationssystems 8 zur Verfügung.

Weiterhin können innerhalb einer Systemkonfiguration aus einem gewählten Modell die Eigenschaften der einzelnen verfügbaren Benutzerprofile über die Administratorfunktion verändert und angepasst werden. Hierzu gehört beispielsweise die Festlegung von Schlüsseln (Passwörtern) für geschützte Profile. Für diese Benutzerprofile können die Schlüssel generell als Ziffern oder als Ziffern-/Buchstabenkombination über eine Tastatureingabe definiert werden. Weiterhin können die Schlüssel sprecherunabhängig als Ziffernsequenz oder als beliebiger Wortlaut für eine Spracheingabe voreingestellt sein, beispielsweise durch das Geschäftsmodell oder den Administrator, oder sprecherabhängig als beliebiger Wortlaut, der über eine Dialogführung trainiert werden kann, festgelegt werden.

Beispielsweise kann durch die Administratorfunktion festgelegt werden, dass jedes Benutzerprofil über ein Adressbuch für Zieladressen mit der Einteilung für private und geschäftliche Zieladressen, letzte Ziele, eine Zieladresse "nach Hause" und eine Zieladresse "zur Arbeit" verfügt.

Das erfindungsgemäße System gewährleistet somit eine hohe Flexibilität unter unterschiedlichsten Einsatzbedingungen.

## Patentansprüche

1. Elektronisches Informations- und/oder Kommunikationssystem eines Kraftfahrzeugs, mit einer Recheneinheit (1), die mit einer optischen Ausgabeeinheit (3) und einer Eingabeeinheit (2) verbunden ist, sowie mit einem Speicherelement (4) zur Abspeicherung von mehreren Benutzerprofilen, wobei zumindest einige der Benutzerprofile auf der optischen Ausgabeeinheit (3) anzeigbar sind, eines der angezeigten Benutzerprofile über die Eingabeeinheit (2) auswählbar ist und Systemparameter des elektronischen Systems mit dem ausgewählten Benutzerprofil automatisch einstellbar sind und wobei das elektronische System mehrere Komponenten enthält, **dadurch gekennzeichnet, dass** das: elektronische System Mittel zum Sperren mindestens einer der Komponenten aufgrund des ausgewählten Benutzerprofils enthält.

2. Elektronisches System nach Anspruch 1, **dadurch gekennzeichnet, dass** das Speicherelement (4) neben offen auswählbaren Benutzerprofilen auch geschützte Benutzerprofile enthält.

3. Elektronisches System nach einem der vorhergehenden Ansprüche, **dadurch gekennzeichnet, dass** die Benutzerprofile editierbar sind.

4. Elektronisches System nach einem der vorhergehenden Ansprüche, **dadurch gekennzeichnet, dass** neben den Benutzerprofilen ein unveränderbares Profil mit einer Grundkonfiguration des elektronischen Systems in dem Speicherelement (4) abgespeichert ist.

5. Elektronisches System nach einem der vorhergehenden Ansprüche, **dadurch gekennzeichnet, dass** die geschützten Profile mit einem Passwort-Schutz versehen sind.

6. Elektronisches System nach Anspruch 5, **dadurch gekennzeichnet, dass** als Passwort-Schutz Schlüssel als Ziffern bzw. Buchstaben-/Ziffernkombinationen über eine Tastatur definierbar sind oder sprecherunabhängig als Ziffernsequenz oder als beliebiger Wortlaut für eine Spracheingabe voreinstellbar sind oder sprecherabhängig als beliebiger Wortlaut, der über eine Dialogführung trainierbar ist, festlegbar sind.

7. Elektronisches System nach einem der vorhergehenden Artsprüche, **dadurch gekennzeichnet, dass** eine Administrator-Funktion vorgesehen ist, die spezielle Rechte zur übergeordneten Konfiguration von Benutzerprofilen umfasst.

8. Elektronisches System nach Anspruch 7, **dadurch gekennzeichnet, dass** mittels der Administrator-Funktion die Funktionalität des elektronischen Systems für die Benutzerprofile individuell festlegbar ist.

9. Elektronisches System nach Anspruch 8 oder 9, **dadurch gekennzeichnet, dass** über die Administrator-Funktion unterschiedliche Modelle mit jeweils modellabhängiger Anzahl und Art der Benutzerprofile wählbar sind.

10. Elektronisches System nach einem der vorhergehenden Ansprüche, **dadurch gekennzeichnet, dass** ein Spracherkennungssystem (5) Bestandteil des elektronischen Systems ist.

11. Elektronisches System nach Anspruch 10, **dadurch gekennzeichnet, dass** die Benutzerprofile sprecherabhängige Profile und mindestens ein sprecherunabhängiges Benutzerprofil umfassen.

12. Elektronisches System nach Anspruch 9 oder 10, **dadurch gekennzeichnet, dass** ein Benutzerprofil mittels des Spracherkennungssystems (5) auswählbar ist.

13. Elektronisches System nach einem der vorhergehenden Ansprüche, **dadurch gekennzeichnet, dass** es sich bei dem elektronischen System um ein Multimediasystem handelt oder das elektronische System ein Multimediasystem beinhaltet.

14. Elektronisches System nach einem der vorhergehenden Ansprüche, **dadurch gekennzeichnet, dass** es sich bei dem elektronischen System um ein Navigationssystem handelt oder das elektronische System ein Navigationssystem (8) beinhaltet.

## Claims

1. Electronic navigational or multimedia system of a motor vehicle, having a computing unit (1) which is connected to an optical output unit (3) and an input unit (2), and having a memory element (4) for storing a plurality of user profiles, **characterized in that** at least some of the user profiles can be displayed on the optical output unit (3), one of the displayed user profiles can be selected by means of the operator control unit (2), and system parameters of the electronic system can be set automatically with the selected user profile.

2. Electronic system according to Claim 1, **characterized in that** the memory element (4) contains both user profiles which can be selected openly and protected user profiles.

3. Electronic system according to one of the preceding claims, **characterized in that** the user profiles can be edited.

4. Electronic system according to one of the preceding claims, **characterized in that**, in addition to the user profiles, an invariable profile with a basic configuration of the electronic system is stored in the memory element (4).

5. Electronic system according to one of the preceding claims, **characterized in that** the protected profiles are provided with a password protection.

6. Electronic system according to Claim 5, **characterized in that** as password protection it is possible to define keys as numbers or letter/number combinations by means of a keyboard or to preset said keys in a speaker-independent fashion as number sequence or as any desired wording for a speech input means or to specify said keys in a speaker-dependent fashion as any desired wording which can be trained by means of a dialogue prompting system.

7. Electronic system according to one of the preceding claims, **characterized in that** an administrator function is provided which comprises specific rights for superordinate configuration of user profiles.

8. Electronic system according to Claim 7, **characterized in that** by means of the administrator function it is possible to specify the functionality of the electronic system for the user profiles on an individual basis.

9. Electronic system according to Claim 8 or 9, **characterized in that** by means of the administrator function it is possible to select different models with a respectively model-dependent number and type of user profiles.

10. Electronic system according to one of the preceding claims, **characterized in that** a voice recognition system (5) is a component of the electronic system.

11. Electronic system according to Claim 10, **characterized in that** the user profiles comprise speaker-dependent profiles and at least one speaker-independent user profile.

12. Electronic system according to Claim 9 or 10, **characterized in that** a user profile can be selected by means of the voice recognition system (5).

13. Electronic system according to one of the preceding claims, **characterized in that** the electronic system is a multimedia system or the electronic system includes a multimedia system.

14. Electronic system according to one of the preceding claims, **characterized in that** the electronic system is a navigation system or the electronic system includes a navigation system (8).

## Revendications

1. Système électronique de navigation ou système électronique multimédia pour véhicule automobile, comportant une unité de calcul (1), qui est reliée à une unité d'édition optique (3) et à une unité de saisie (2), ainsi qu'un organe de mémorisation (4) permettant de stocker plusieurs profils d'utilisateur, **caractérisé par le fait que** au moins quelques-uns des profils d'utilisateur peuvent être affichés sur l'unité d'édition optique (3), que l'un des profils d'utilisateur affichés peut être sélectionné par l'intermédiaire de l'unité de commande (2) et que des paramètres du système électronique sont réglables automatiquement par le profil d'utilisateur sélectionné.

2. Système électronique selon la revendication 1, **caractérisé par le fait que** l'organe de mémorisation (4) renferme, en plus de profils d'utilisateur pouvant être sélectionnés librement, également des profils d'utilisateur protégés.

3. Système électronique selon l'une des revendications précédentes, **caractérisé par le fait que** les profils d'utilisateur peuvent être édités.

4. Système électronique selon l'une des revendications précédentes, **caractérisé par le fait que**, en plus des profils d'utilisateur, un profil non modifiable comportant une configuration de base du système électronique est stocké dans l'organe de mémorisation (4).

5. Système électronique selon l'une des revendications précédentes, **caractérisé par le fait que** les profils protégés sont dotés d'une protection par mot de passe.

6. Système électronique selon la revendication 5, **caractérisé par le fait que**, en tant que protection par mot de passe, des clefs peuvent être définies, par l'intermédiaire d'un clavier, sous forme de combinaisons de chiffres ou de lettres et de chiffres ou être préréglées pour une saisie vocale, pour le mode multilocuteur, en tant que séquence de chiffres ou en tant que prononciation ayant n'importe quel contenu ou être définies, pour le mode monolocuteur, en tant que prononciation ayant n'importe quel contenu qui peut être apprise par l'intermédiaire d'un dialogue guidé.

7. Système électronique selon l'une des revendications précédentes, **caractérisé par le fait qu'**il est prévu une fonction d'administrateur qui comprend des droits particuliers pour la configuration de profils d'utilisateur à un niveau supérieur.

8. Système électronique selon la revendication 7, **caractérisé par le fait que**, au moyen de la fonction d'administrateur, la fonctionnalité du système électronique peut être définie individuellement pour chaque profil d'utilisateur.

9. Système électronique selon la revendication 8 ou 9, **caractérisé par le fait que**, par l'intermédiaire de la fonction d'administrateur, des modèles différents peuvent être choisis avec un nombre et un genre de profils d'utilisateur dépendant dans chaque cas du modèle.

10. Système électronique selon l'une des revendications précédentes, **caractérisé par le fait qu'**un système (5) de reconnaissance vocale fait partie du système électronique.

11. Système électronique selon la revendication 10, **caractérisé par le fait que** les profils d'utilisateur comprennent des profils monolocuteurs et au moins un profil d'utilisateur multilocuteur.

12. Système électronique selon la revendication 9 ou 10, **caractérisé par le fait qu'**un profil d'utilisateur peut être sélectionné au moyen du système (5) de reconnaissance vocale.

13. Système électronique selon l'une des revendications précédentes, **caractérisé par le fait que** le système électronique est un système multimédia ou que le système électronique renferme un système multimédia.

14. Système électronique selon l'une des revendications précédentes, **caractérisé par le fait que** le système électronique est un système de navigation ou que le système électronique renferme un système de navigation (8).
